# EUROPÄISCHE PATENTANMELDUNG

(11) **EP 1 704 781 A1**
(43) Veröffentlichungstag der Anmeldung: **27.09.2006**
(21) Anmeldenummer: 05025853.2
(22) Anmeldetag: 26.11.2005
(51) Int. Cl.: A23F 5/40

(54) **Instantzubereitung und Verfahren zum Herstellen eines Cappuccino-Getränks**

(30) Priorität: 24.03.2005 EP 05006497
(71) Anmelder: Cyber Vision Holding S.A., 9991 Weiswampach (LU)
(72) Erfinder:
(74) Vertreter: Klocke, Peter

(57) **Zusammenfassung**

Pulverförmige Instantzubereitung als Trockenmischung zur Zubereitung eines Cappuccino-Getränks in Verbindung mit einem frischen, heißen Kaffee, welches bezogen auf das Gesamtgewicht einen schäumenden Creamer als Hauptbestandteil, ein Süßungsmittel mit hoher Auflösungsgeschwindigkeit und einen Aufheller aufweist. Zur Zubereitung eines Cappuccino-Getränks wird die pulverförmige Instantzubereitung als Trockenmischung mit einem heißen, frisch gebrühten Kaffee übergossen und dabei ein Schaum erzeugt, der den Schaum und die Cremigkeit eines herkömmlich gebrühten Cappuccino-Getränks simuliert.

## Beschreibung

Die vorliegende Erfindung betrifft eine pulverförmige Instantzubereitung als Trockenmischung ohne Kaffee, Kaffepulver oder Kaffeearoma für die Zubereitung eines Cappuccino-Getränks in Verbindung mit einem heißen Kaffee sowie ein Verfahren zur Zubereitung eines Cappuccino-Getränks.

Ein echter Cappuccino besteht aus einem unter richtigem Druck, richtiger Temperatur und richtigem Espresso-Kaffee hergestellten Espresso und aufgeschäumter frischer Milch. Es ist jedoch auch bekannt, Instantpulver anzubieten, das vom Verbraucher mit heißem Wasser aufgelöst wird. Das Instantpulver enthält alle Komponenten, die nach der Auflösung mit heißem Wasser den typischen Cappuccino-Geschmack erzeugen sollen. Derartige Instantpulver sind jedoch nicht befriedigend hinsichtlich der Geschmacksnote, da durch die Pulverisierung des Kaffees sehr viele Aroma-/Geschmacksbestandteile verloren gehen und auch durch die Pulverisierung der Milch der typische Frischmilch-Geschmack beeinträchtigt wird.

So beschreibt die EP-A-885 566 eine Instantzubereitung für ein Cappuccino-Getränk, die 10 bis 30 Gew.% lösbares Kaffeepulver und 70 bis 90 Gew.% eines lösbaren schäumenden Creamers enthält. Der Creamer selbst enthält 25 Gew.% fettfreies Milchpulver als Aufheller und 12,8 Gew.% Süßungsmittel.

US-A-6 174 557 offenbart eine Trockenmischung zur Zubereitung eines Cappuccino-Getränks umfassend 50 Gew.% schäumenden Creamer, 33,5 Gew.% Sucrose als Süßungsmittel und 16 Gew.% Kaffee. Der Creamer enthält 63 Gew.% Magermilchpulver als Aufheller.

EP-A-1 064 850 offenbart eine Trockenmischung zur Zubereitung eines Cappuccino-Getränks umfassend 50 Gew.% schäumenden Creamer, 43 Gew.% Sucrose als Süßungsmittel und 8 Gew.% Kaffeepulver. Der Creamer enthält 21 Gew.% milchfreien Aufheller.

EP-A-1 074 181 offenbart eine Trockenmischung zur Zubereitung eines Cappuccino-Getränks umfassend schäumende Creamerpartikel, die fettfreies Milchpulver, Lactose und Sucrose enthalten, ein Creamer-Basisgemisch und Kaffeepulver in einem Gewichtsverhältnis von 1,5:7 bis 0:1,5.

Der vorliegenden Erfindung liegt daher die Aufgabe zu Grunde, eine pulverförmige Instantzubereitung und ein Verfahren zum Herstellen eines Cappuccino-Getränks vorzuschlagen, das einerseits hinsichtlich seiner Geschmacksnote an einen echten Cappuccino heran reicht und andererseits insbesondere in Privathaushalten, unter Verwendung der üblichen heutigen modernen Kaffeeautomaten schnell herstellbar ist.

Diese Aufgabe wird erfindungsgemäß durch eine pulverförmige Instantzubereitung mit den Merkmalen des Hauptanspruchs sowie durch ein Verfahren gemäß den Merkmalen der Verfahrensansprüche gelöst. Weitere vorteilhafte Ausgestaltungen sind den Unteransprüchen zu entnehmen.

Gemäß der Erfindung wird das Cappuccino-Getränk in Verbindung mit einem heißen Kaffee hergestellt, indem ein normaler heißer Kaffee, beispielsweise bei einer Temperatur von 75 °C, über die pulverförmige Instantzubereitung gegossen wird. Die Instantzubereitung ist so eingestellt, dass die einzelnen Bestandteile sich, ohne dass ein Umrühren erforderlich ist, nur durch das Übergießen des heißen Kaffees auflösen und dadurch ein heißes, stabiles und homogenes Cappuccino-Getränk mit einer hohen Schaumbildung und entsprechendem cremigem Mundgefühl entsteht, das einem echten Cappuccino-Getränk entspricht.

Hierzu wird eine pulverförmige Instantzubereitung verwendet, die keinen Kaffee, kein Kaffeepulver oder Kaffeearoma enthält, und die bezogen auf das Raumvolumen einen schaumbildenden Creamer als Hauptbestandteil, ein leicht lösliches Süßungsmittel mit hoher Auflösungsgeschwindigkeit und ein Aufhellungsmittel aufweist. Vorzugsweise liegt der Anteil des Creamers am Raumvolumen bei 65 bis 75, vorzugsweise bei ca. 70%. Durch das Zusammenwirken dieser Hauptkomponenten wird eine Instantzubereitung bereitgestellt, die die Herstellung eines Cappuccino-Getränks auf diese Art und Weise ermöglicht. Creamer als solches sind bekannt, wobei bevorzugt ein Creamer mit einem Schaumpulver auf Eiweißbasis verwendet wird, das bei Zugabe einer Flüssigkeit die Eigenschaft eines Eiweißschaumes entwickelt und dadurch optisch eine Sahnehaube eines herkömmlich hergestellten Cappuccino-Getränks entspricht. Hierzu ist erforderlich, dass der Creamer die Eigenschaft hat, viel Sauerstoff in den Partikelstrukturen einzuschließen. Dadurch wird ein leichtes Schüttgewicht von theoretisch ca. 172 g/l (real 200 bis 300 g/l) produziert, welches wiederum die Löslichkeit mit einer heißen Flüssigkeit in die gewünschte Schaumrichtung bringt. Zur Erreichung eines optimalen Geschmacksgefühls bedarf es bekanntlich auch noch Fett, das durch den Creamer in bekannter Art eingebracht wird. Die Löslichkeit zur Erzeugung des Cappuccino-Getränks aus dem Instantpulver und dem Kaffee wird davon nicht oder kaum beeinflusst.

Als Süßungsmittel wird entweder raffinierter Zucker oder für die saccharosefreie Anwendung Laktose und Glukose verwendet, wobei die Auflösung des Süßungsmittels zusammen mit dem Creamer durch das Übergießen mit frisch gebrühtem Kaffee zwei bis drei Sekunden beträgt. Das Süßungsmittel mit hoher Auflösungsgeschwindigkeit zeichnet sich durch einen feinpulvrigen Kristallzucker aus, der durch Agglomeration leicht löslich gemacht wurde. Zusammen mit dem schaumbildenden Creamer wird bei der Zugabe von heißem Kaffee die thermische Energie genutzt, um eine hohe Schaumbildung zu erreichen. Gleichzeitig wird schnelle Löslichkeit ohne Verklumpungen bewirkt, so dass ein stabiles homogenes Getränk entsteht.

Zusätzlich zu den beiden vorgenannten Komponenten enthält die Instantzubereitung als anteilsmäßige Hauptkomponente ein Aufhellungsmittel, beispielsweise in Form eines üblichen auf dem Markt erhältlichen Kaffeeweißers oder Magermilchpulvers.

Der Eiweißanteil an dem Creamer beträgt Vorteilhafterweise 11 bis 13,5, vorzugsweise 12 Gew.%.

Vorzugsweise enthält die Instantzubereitung zu einem ganz geringen Anteil (unter 0,05 Gew.%) Vanillin, um damit ein angenehmes Mundgefühl für das Cappuccino-Getränk zu erzeugen.

Vorteilhafterweise enthält die Instantzubereitung bezogen auf das Gesamtgewicht 20 bis 50 Gew.% Creamer, 40 bis 70 Gew.% Süßungsmittel und 5 bis 20 Gew.% Aufheller. Für ein Cappuccino-Getränk mit Zucker als Süßungsmittel enthält die Instantzubereitung zweckmäßigerweise bezogen auf das Gesamtgewicht 35 bis 40 Gew.%, vorzugsweise 38,5 Gew.% Creamer, 22 bis 30 Gew.%, vorzugsweise 27,5 Gew.% Sandzucker, 20 bis 28 Gew.%, vorzugsweise 24,0 Gew.% leicht löslichen Instantzucker und 7,5 bis 12 Gew.%, vorzugsweise 9,0 Gew.% Aufheller. Der Sandzucker ist für die Herstellung erforderlich, um eine brauchbare Vermischung des Instantzuckers zu gewährleisten. Ohne den Sandzucker wird das Produkt zu leicht. Die Löskraft des Instantzuckers bewirkt auch die Auflösung des Sandzuckers. Unter schnell löslichem Süßungsmittel mit Zucker ist daher immer ein Mischung aus schnell löslichem Instantzucker und Sandzucker zu verstehen.

Für ein saccharosefreies Cappuccino-Getränk enthält die Instantzubereitung zweckmäßigerweise bezogen auf das Gesamtgewicht 37,5 bis 45 Gew.%, vorzugsweise 41,5 Gew.% Creamer, 25 bis 50 Gew.% Glukose, 25 bis 50 Gew.%, Laktose, 7,5 bis 12 Gew.%, vorzugsweise 9,0 Gew.% Aufheller, wobei der Anteil an Glukose und Laktose sich gegenseitig beeinflusst und die Erhöhung der einen Komponente eine Reduzierung der anderen bewirkt, und der Glukoseanteil auch durch die Zutaten in den anderen Komponenten bestimmt wird.

Zur Erzeugung eines vom Cappuccino-Getränk mit Kaffeegeschmack abweichenden Aromas können noch in der Instantzubereitung, bezogen auf das Gesamtgewicht, 0,1 bis 4 Gew.% naturidentische Aromastoffe, vorzugsweise Schokolade, Amaretto, Rum, Haselnuss oder Vanille enthalten sein.

Zusätzlich können noch andere Inhaltsstoffe in Einzelmengen bis maximal 1,5 Gew.% zugegeben werden, um das Getränk geschmacklich zu optimieren. Durch die zusätzliche Zugabe von Vanillin kann ein angenehmes Mundgefühl erzeugt werden. Das Vanillin ist bevorzugt in kristalliner Form in der pulverförmigen Instantzubereitung enthalten. Des weiteren kann zur Verfeinerung des Geschmacks zusätzlich nicht jodiertes Salz und/oder Abrundungsaroma in der Instantzubereitung enthalten sein. Das Abrundungsaroma dient dazu, geschmackliche Spitzen wegzunehmen und dem Getränk geschmackliche Harmonie zu vermitteln. Des weiteren kann zur Erreichung der gewünschten Eigenschaften der pulverförmigen Instantzubereitung ein allgemein übliches Gleitmittel, beispielsweise Tricalciumphosphat, zugegeben sein, das ein Verklumpen des Pulvers sowie die Aufnahme von Feuchtigkeit verhindert und die Gleitfähigkeit des Produktes beim Einfüllen in die Verpackung bei der Herstellung bis zum Einfüllen in das Behältnis für das Cappuccino-Getränk gewährleistet.

Die Instantzubereitung und das Verfahren zur Herstellung des Cappuccino-Getränks erlaubt somit ohne die Verwendung eines Kaffeepulvers in der Instantzubereitung ein Cappuccino-Getränk mit frisch gebrühtem Kaffee einfach durch Übergießen ohne Zuhilfenahme weiterer Rühr- und Schäummittel herzustellen. Allein durch das Übergießen wird auf Grund der besonderen Zusammensetzung der Instantzubereitung ein Schaum erzeugt, der den Schaum und die Cremigkeit eines herkömmlich gebrühten Cappuccino-Getränks simuliert. Durch die Erfindung wird somit ein besonderes Topping für ein Kaffeegetränk dung wird somit ein besonderes Topping für ein Kaffeegetränk bereitgestellt, das bisher nicht bekannt war.

In einem Ausführungsbeispiel wurde zur Herstellung einer Instantzubereitung für ein Cappuccino-Getränk auf das Gesamtgewicht bezogen 38,5 Gew.% eines schaumbildenden Creamer auf Eiweißbasis, 27,5 Gew.% eines raffinierten normalen Zuckers, 24,0 Gew.% eines schnell löslichen Instantzuckers Typ Danisco verwendet. Dieser schnell lösliche Instantzucker besteht aus Saccharose, die durch einen besonderen Agglomerationsprozess frei gerinnend, direkt komprimierbar und leicht löslich gemacht wurde. Der verwendete Creamer enthält nach Standardanalyse als Hauptbestandteile typischerweise 55 Gew.% Kohlehydrate, 26 Gew.% Fett und 12 Gew.% Eiweiß. Sein Schüttgewicht beträgt 150 bis 250 g/l, typischerweise 200 g/l. Zusätzlich wurden 9 Gew.% Kaffeeweißer vom Typ DP 374 von DMV International, sowie nicht jodiertes Salz, Tricalciumphosphat, Abrundungsaroma zugegeben. Des weiteren enthält die Mischung des Ausführungsbeispiels noch 0,025 Gew.% Vanillin in kristalliner Form.

Die Mischung dieses Ausführungsbeispiels enthält keine Aromastoffe und stellt somit die Grundmischung für ein Cappuccino-Getränk dar. Bei der Zugabe eines der vorstehend genannten Aromen ändert sich entsprechend der zugegebenen Menge des Aromas von 0,1 bis 4 Gew.% der Anteil der anderen Komponenten mit Ausnahme des Creamers proportional.

Bei einer beispielhaften saccharosefreien Mischung, bei der der raffinierte Zucker und der Instantzucker durch Laktose und Glukose ersetzt wurde, betrug der Anteil an Laktose 48 Gew.% und mit Glukose zusammen 60 Gew.%, wobei die Glukose durch die Inhaltsstoffe der anderen Komponenten (Creamer, Aufheller) beigegeben wird. Zur Erzeugung einer ausreichenden Auflösungsgeschwindigkeit wird bei dieser Mischung der Anteil des Creamers um ca. 3 bis 5 Gew.% gegenüber der Grundmischung auf Saccharosebasis erhöht. Damit ergibt sich beispielsweise schon ein Anteil von Glukose von 16,2 Gew.% aus dem Creamer.

Bei dem Einsatz von bestimmten Aromastoffen, beispielsweise Amaretto oder Vanille, wird bevorzugt Glukose in einem Bereich von 10 bis 30 Gew.% anstelle der Fruktose eingesetzt.

Die Trockenmasse von 1 kg der pulverförmigen Instantzubereitung ergibt ein Volumen von 12 Liter, wovon der Anteil des Creamers ca. 70% beträgt. Für die Zubereitung eines derartigen Cappuccino-Getränks genügt die Zugabe von 12 g der pulverförmigen Instantzubereitung für 130 ml heißen, frisch gebrühten Kaffee.

## Patentansprüche

1. Pulverförmige Instantzubereitung als Trockenmischung ohne Kaffee, Kaffepulver oder Kaffeearoma zur Zubereitung eines Cappuccino-Getränks in Verbindung mit einem frischen, heißen Kaffee, welches bezogen auf das Raumvolumen einen schäumenden Creamer als Hauptbestandteil, ein leicht lösliches Süßungsmittel und einen Aufheller aufweist.

2. Pulverförmige Instantzubereitung nach Anspruch 1, bei der das Raumvolumen des Creamers 65 bis 75 % beträgt.

3. Pulverförmige Instantzubereitung nach Anspruch nach einem der vorangegangenen Ansprüche, mit einem auf Eiweiß basierenden Creamer, vorzugsweise mit einem Eiweißanteil am Creamer von 11 bis 13,5 Gew.%, besonders bevorzugt 12 Gew.%.

4. Pulverförmige Instantzubereitung nach Anspruch die, bezogen auf das Gesamtgewicht, 20 bis 50 Gew.% Creamer, 40 bis 70 Gew.% Süßungsmittel mit hoher Auflösungsgeschwindigkeit, 5 bis 20 Gew.% Aufheller enthält.

5. Pulverförmige Instantzubereitung nach Anspruch 4, die, bezogen auf das Gesamtgewicht,
35 bis 40 Gew.%, vorzugsweise 38,5 Gew.% Creamer,
22 bis 30 Gew.%, vorzugsweise 27,5 Gew.% Sandzucker,
20 bis 28 Gew.%, vorzugsweise 24,0 Gew.% Instantzucker mit hoher Auflösungsgeschwindigkeit,
7,5 bis 12 Gew.%, vorzugsweise 9,0 Gew.% Aufheller enthält.

6. Pulverförmige Instantzubereitung nach Anspruch 4, die, bezogen auf das Gesamtgewicht
37,5 bis 45 Gew.%, vorzugsweise 41,5 Gew.% Creamer,
25 bis 50 Gew.% Glukose,
25 bis 50 Gew.%, Laktose,
7,5 bis 12 Gew.%, vorzugsweise 9,0 Gew.% Aufheller enthält, wobei der Anteil an Glukose und Laktose sich gegenseitig beeinflusst und der Glukoseanteil auch durch die Inhaltsstoffe der anderen Komponenten beigegeben wird.

7. Pulverförmige Instantzubereitung nach einem der vorangegangenen Ansprüche 2 bis 6, die bezogen auf das Gesamtgewicht 0,01 bis 4 Gew.% naturidentische Aromastoffe, vorzugsweise Schokolade, Amaretto, Rum, Haselnuss, Vanille, enthält.

8. Verfahren zur Zubereitung eines Cappuccino-Getränkes mittels einer pulverförmigen Instantzubereitung nach einem der vorangegangenen Ansprüche, **dadurch gekennzeichnet, dass** die pulverförmige Instantmischung als Trockenmischung mit einem frisch gebrühten Kaffee zum fertigen Cappuccino-Getränk übergossen wird.

9. Verfahren zur Zubereitung eines Cappuccino-Getränkes, **dadurch gekennzeichnet, dass** eine pulverfömige Instantzubereitung als Trockenmischung mit einem heißen Kaffee übergossen und dabei ein Schaum erzeugt wird, welcher den Schaum und die Cremigkeit eines herkömmlich gebrühten Cappuccino-Getränks simuliert.

10. Verfahren nach Anspruch 9, **dadurch gekennzeichnet, dass** eine Instantzubereitung verwendet wird, die als Hauptbestandteil am Volumen der Trockenmischung einen schäumenden Creamer, vorzugsweise mit einem Eiweißschaum, und zusätzlich Süßungsmittel mit einer hohen Auflösungsgeschwindigkeit sowie einen Aufheller enthält.

## Geänderte Patentansprüche

### Geänderte Patentansprüche gemäss Regel 86(2) EPÜ.

**1.** Pulverförmige Instantzubereitung als Trockenmischung ohne Kaffee, Kaffepulver oder Kaffeearoma zur Zubereitung eines Cappuccino-Getränks in Verbindung mit einem frischen, heißen Kaffee, welches bezogen auf das Raumvolumen einen schäumenden Creamer als Hauptbestandteil, ein leicht lösliches Süßungsmittel und einen Aufheller aufweist.

**2.** Pulverförmige Instantzubereitung nach Anspruch 1, bei der das Raumvolumen des Creamers 65 bis 75 % beträgt.

**3.** Pulverförmige Instantzubereitung nach einem der vorangegangenen Ansprüche, mit einem auf Eiweiß basierenden Creamer, vorzugsweise mit , einem Eiweißanteil am Creamer von 11 bis 13,5 Gew.%, besonders bevorzugt 12 Gew.%.

**4.** Pulverförmige Instantzubereitung nach einem der vorangegangenen Ansprüche, die, bezogen auf das Gesamtgewicht, 20 bis 50 Gew.% Creamer, 40 bis 70 Gew.% Süßungsmittel mit hoher Auflösungsgeschwindigkeit, 5 bis 20 Gew.% Aufheller enthält.

**5.** Pulverförmige Instantzubereitung nach Anspruch 4, die, bezogen auf das Gesamtgewicht,
35 bis 40 Gew.%, vorzugsweise 38,5 Gew.% Creamer,
22 bis 30 Gew.%, vorzugsweise 27,5 Gew.% Sandzucker,
20 bis 28 Gew.%, vorzugsweise 24,0 Gew.% Instantzucker mit hoher Auflösungsgeschwindigkeit,
7,5 bis 12 Gew.%, vorzugsweise 9,0 Gew.% Aufheller enthält.

**6.** Pulverförmige Instantzubereitung nach Anspruch 4, die, bezogen auf das Gesamtgewicht
37,5 bis 45 Gew.%, vorzugsweise 41,5 Gew.% Creamer,
25 bis 50 Gew.% Glukose,
25 bis 50 Gew.%, Laktose,
7,5 bis 12 Gew.%, vorzugsweise 9,0 Gew.% Aufheller enthält, wobei der Anteil an Glukose und Laktose sich gegenseitig beeinflusst und der Glukoseanteil auch durch die Inhaltsstoffe der anderen Komponenten beigegeben wird.

**7.** Pulverförmige Instantzubereitung nach einem der vorangegangenen Ansprüche 2 bis 6, die bezogen auf das Gesamtgewicht 0,01 bis 4 Gew.% naturidentische Aromastoffe, vorzugsweise Schokolade, Amaretto, Rum, Haselnuss, Vanille, enthält.

**8.** Verfahren zur Zubereitung eines Cappuccino-Getränkes, **dadurch gekennzeichnet, dass** eine pulverfömige Instantzubereitung als Trockenmischung mit einem heißen Kaffee zum fertigen Cappuccino-Getränk übergossen wird.

**9.** Verfahren zur Zubereitung eines Cappuccino-Getränkes nach Anspruch 8, **dadurch gekennzeichnet, dass** beim Übergießen der pulverfömigen Instantzubereitung mit dem heißen Kaffee ein Schaum erzeugt wird, welcher den Schaum und die Cremigkeit eines herkömmlich gebrühten Cappuccino-Getränks simuliert.

**10.** Verfahren nach Anspruch 9, **dadurch gekennzeichnet, dass** eine Instantzubereitung, vorzugsweise eine Instantzubereitung nach einem der Ansprüche 1 bis 7, verwendet wird, die als Hauptbestandteil am Volumen der Trockenmischung einen schäumenden Creamer, vorzugsweise mit einem Eiweißschaum, und zusätzlich Süßungsmittel mit einer hohen Auflösungsgeschwindigkeit sowie einen Aufheller enthält.
